# EUROPÄISCHE PATENTANMELDUNG

(11) **EP 1 571 123 A1**
(43) Veröffentlichungstag der Anmeldung: **07.09.2005**
(21) Anmeldenummer: 05004182.1
(22) Anmeldetag: 25.02.2005
(51) Int. Cl.: C01B 3/36, C01B 3/38, B01J 12/00, B01J 8/04

(54) **Reformer und Verfahren zum Umsetzen von Brennstoff und Oxidationsmittel zu Reformat**

(30) Priorität: 01.03.2004 DE 102004010014
(71) Anmelder: Webasto AG, 82131 Stockdorf (DE)
(72) Erfinder: Kah, Stefan, 17033 Neubrandenburg (DE); Jahn, Matthias, Dr., 82131 Gauting (DE); Mühlner, Marco, 17033 Neubrandenburg (DE); Lindermeir, Andreas, 17034 Neubrandenburg (DE); Kavurucu, Sena, 17033 Neubrandenburg (DE)

(57) **Zusammenfassung**

Die Erfindung betrifft einen Reformer (10) zum Umsetzen von Brennstoff (12, 14) und Oxidationsmittel (16, 18) zu Reformat (20), mit einer Reaktionszone (22), der Brennstoff (12) und Oxidationsmittel (16) zuführbar sind.

Erfindungsgemäß ist vorgesehen, dass mindestens eine weitere Reaktionszone (24) vorgesehen ist, der Brennstoff (14) und Oxidationsmittel (18) zuführbar sind, und dass in jeder Reaktionszone (22, 24) Brennstoff (12, 14) und Oxidationsmittel (16, 18) zu Reformat (20) umgesetzt werden können.

Die Erfindung betrifft weiterhin ein Verfahren zum Umsetzen von Brennstoff (12, 14) und Oxidationsmittel (16, 18) zu Reformat (20).

## Beschreibung

Die Erfindung betrifft einen Reformer zum Umsetzen von Brennstoff und Oxidationsmittel zu Reformat, mit einer Reaktionszone, der Brennstoff und Oxidationsmittel zuführbar sind.

Die Erfindung betrifft weiterhin ein Verfahren zum Umsetzen von Brennstoff und Oxidationsmittel zu Reformat in einem Reformer mit einer Reaktionszone, bei dem der Reaktionszone Brennstoff und Oxidationsmittel zugeführt werden.

Gattungsgemäße Reformer und gattungsgemäße Verfahren haben zahlreiche Anwendungsbereiche. Insbesondere dienen sie dazu, einer Brennstoffzelle ein wasserstoffreiches Gasgemisch zuzuführen, aus dem dann auf der Grundlage elektrochemischer Vorgänge elektrische Energie erzeugt werden kann. Derartige Brennstoffzellen kommen beispielsweise im Kraftfahrzeugbereich als Zusatzenergiequellen, sogenannte APUs ("auxiliary power unit"), zum Einsatz.

Die Auslegung der Reformer ist von zahlreichen Faktoren abhängig. Neben der Berücksichtigung der Eigenschaften des Reaktionssystems sind zum Beispiel ökonomische Aspekte von Bedeutung, insbesondere auch die Einbindung des Reformers in seine Umgebung. Letzteres betrifft auch den zeitlichen Verlauf der in den Reaktor ein- und austretenden Stoff- und Energieströme. In Abhängigkeit der Applikation und der Umgebung des Reformers kommen somit unterschiedliche Reformierungsverfahren zum Einsatz, was unterschiedliche Reformerkonstruktionen nach sich zieht.

Beispielsweise ist die katalytische Reformierung bekannt, bei der ein Teil des Brennstoffs in einer exothermen Reaktion oxidiert wird. Nachteilig an dieser katalytischen Reformierung ist die hohe Wärmeerzeugung, die Systemkomponenten, insbesondere den Katalysator, irreversibel schädigen können.

Eine andere Möglichkeit zur Erzeugung eines Reformats aus Kohlenwasserstoffen ist das "Steam-Reforming". Dabei werden Kohlenwasserstoffe mit Hilfe von Wasserdampf in einer endothermen Reaktion zu Wasserstoff umgesetzt.

Eine Kombination dieser beiden Prinzipien, das heißt der Reformierung auf der Grundlage einer exothermen Reaktion und der Erzeugung von Wasserstoff durch eine endotherme Reaktion, bei der die Energie für die Dampfreformierung aus der Verbrennung der Kohlenwasserstoffe gewonnen wird, wird als autotherme Reformierung bezeichnet. Hierbei kommt es jedoch zu den zusätzlichen Nachteilen, dass eine Zuführmöglichkeit für Wasser bereitgestellt werden muss. Hohe Temperaturgradienten zwischen der Oxidationszone und der Reformierungszone stellen weitere Probleme im Temperaturhaushalt des gesamten Systems dar.

Die vorliegende Erfindung betrifft insbesondere die Reformierung nach dem Verfahren der partiellen Oxidation (POX). Danach kann die Reformierung von kohlenwasserstoffhaltigen Brennstoffen, beispielsweise Diesel oder Benzin, mit einem Katalysator (CPOX = Catalytic Partial Oxidation) oder ohne Katalysator (TPOX = Thermal Partial Oxidation) durchgeführt werden. Die Nettowärmeproduktion beim Reformierverfahren der partiellen Oxidation ist so groß, dass bei entsprechender Auslegung des Systems Temperaturen deutlich oberhalb der erlaubten Materialobergrenzen auftreten können, wenn keine Gegenmaßnahmen durchgeführt werden. Dies kann zu einer Schädigung der beteiligten Werkstoffe, beispielsweise des Katalysators, führen.

Ein Beispiel für einen Reformer, bei dem Maßnahmen zur Vermeidung einer Schädigung des Katalysators durch hohe Temperaturen ergriffen werden ist in der DE 199 55 892 C2 beschrieben. Bei diesem Reformer ist der Katalysator außerhalb des Bereichs der Reaktionszone angeordnet, in der die höchsten Temperaturen entstehen, so dass keine Schädigung des Katalysators durch die hohen Temperaturen erfolgen kann.

Eine genauere Betrachtung der Temperaturverhältnisse innerhalb des Reformers ergibt, dass sich beim Verfahren der partiellen Oxidation ein sogenannter "Hot-Spot" innerhalb der Oxidationszone ausbildet. Da sich die Oxidationszone ihrerseits im Bereich des Eingangs, das heißt der Brennstoffzuführung, der Reaktionszone aufbaut und anschließend eine Abnahme der Temperatur aufgrund endothermer Reformier-Reaktionen stattfindet, ist der Hot-Spot eher im Eingangsbereich der Reaktionszone angeordnet. Allerdings ist die Lage des Hot-Spot von der Brennstoffleistung beziehungsweise der Lastmodulation des Reformers abhängig, da diese die Verweilzeit der reagierenden Substanzen beeinflusst.

Somit kann sich der Hot-Spot je nach Brennstoffleistung an unterschiedlichen Orten der Oxidationszone befinden, was den potentiell geschädigten Bereich der Reaktionszone vergrößert. Weitere Probleme hängen damit zusammen, dass sich bei geringer Leistung der Hauptteil der exothermen chemischen Reaktionen auf den Eingangsbereich der Reaktionszone konzentrieren. Folglich hat das Produktgemisch noch einen weiten Weg durch die Reaktionszone zurückzulegen, auf dem es Wärme abgeben kann, beispielsweise an den Katalysator. Dies kann dazu führen, dass die Produktgastemperatur am Austritt des Reformers zu gering ist, insbesondere für die Weiterverarbeitung des Reformats in einer Brennstoffzelle.

Weitere Probleme aufgrund des Temperaturgefälles in der Reaktionszone hängen damit zusammen, dass durch die niedrigen Temperaturen in der der Oxidationszone nachgelagerten Reformierzone hohe Kohlenwasserstoffemissionen aufgrund geringer Brennstoffumsätze und eine erhöhte Verkokungstendenz und Vergiftungstendenz des Katalysators vorliegen. Folglich sind Katalysatoren mit großen Reaktionszonen erforderlich. Will man einen Katalysator aufgrund beispielsweise einer Verkokung regenerieren, muss der Betriebsmodus des Reformers gewechselt werden, indem beispielsweise eine vollständige Oxidation erfolgt. Während dieses Regenerationsmodus kann kein Reformat zur Verfügung gestellt werden. Eine nachgelagerte Brennstoffzelle kann in dieser Zeit keine elektrische Energie erzeugen.

Der Erfindung liegt die Aufgabe zugrunde, einen Reformer und ein Verfahren zum Umsetzen von Brennstoff und Oxidationsmittel zu Reformat zur Verfügung zu stellen, so dass es nicht zu einer Schädigung von Bauteilen kommt; zusätzlich soll der Reformierungsprozess in einfacher und zuverlässiger Weise beeinflusst werden können.

Diese Aufgabe wird mit den Merkmalen der unabhängigen Ansprüche gelöst.

Vorteilhafte Ausführungsformen der Erfindung sind in den abhängigen Ansprüchen angegeben.

Die Erfindung baut auf dem gattungsgemäßen Reformer dadurch auf, dass mindestens eine weitere Reaktionszone vorgesehen ist, der Brennstoff und Oxidationsmittel zuführbar sind, und dass in jeder Reaktionszone Brennstoff und Oxidationsmittel zu Reformat umgesetzt werden können. Durch die Aufteilung des Reaktionsteils des Reformers in beispielsweise zwei Reaktionszonen verringert sich der räumliche Bereich, über den sich der Hot-Spot aufgrund der Variation der Brennstoffleistung befinden kann. In guter Näherung halbiert sich der räumliche Bereich für den Hot-Spot. Die Modulation der Brennstoffleistung kann auf der Grundlage der Aufteilung beispielsweise dadurch erfolgen, dass nur eine der Reaktionszonen in Betrieb genommen wird beziehungsweise dass die Reaktionszonen mit unterschiedlicher Brennstoffleistung arbeiten.

Nützlicherweise ist vorgesehen, dass die Umsetzung nach dem Verfahren der partiellen Oxidation (POX) erfolgt. Da bei der partiellen Oxidation besonders hohe Temperaturen auftreten, führt die Erfindung hier zu besonderen Vorteilen.

Dies gilt insbesondere in dem Fall, dass die Umsetzung nach dem Verfahren der katalytischen partiellen Oxidation (CPOX) erfolgt. In diesem Fall kann, wie erwähnt, die Schädigung eines Katalysators vermieden werden.

Besonders nützlich ist es, dass die Reaktionszonen in thermischem Kontakt stehen. Hierdurch kann ein Temperaturausgleich zwischen den Reaktionszonen erfolgen. Heiße Bereiche einer Reaktionszone können Wärme an kühlere Bereiche einer benachbarten anderen Reaktionszone abgeben.

Dies ist insbesondere in dem Zusammenhang nützlich, dass die Reaktionszonen eine im Wesentlichen axialsymmetrische Anordnung aufweisen, wobei eine Reaktionszone eine andere umgibt, dass die Hauptströmungsrichtung der miteinander reagierenden Substanzen im Wesentlichen eine axiale Richtung ist und dass die Hauptströmungsrichtungen in einander benachbarten Reaktionszonen entgegengesetzt sind. Man erhält somit eine Vergleichmäßigung des axialen Temperaturprofils. Die heißen Oxidationsbereiche der einen Reaktionszone sind den kühleren Reformierzonen einer benachbarten Reaktionszone benachbart. Dies führt einerseits dazu, dass die Temperatur der Oxidationszone verringert werden kann. Andererseits kann die Temperatur der Reformierungszone auf hohem Niveau gehalten werden. Die Problematik hoher Kohlenwasserstoffemissionen aufgrund geringer Brennstoffumsätze sowie der Verkokungs- und Vergiftungstendenzen des Katalysators sind somit verringert.

Es kann weiterhin vorgesehen sein, dass ein Wärmeübertrager zum Abführen von Wärme aus den Reaktionszonen vorgesehen ist. Hierdurch kann insbesondere die Temperatur des Hot-Spot verringert werden. Als Kühlmedium eignen sich vorzugsweise sowohl Luft als auch mit Dampf oder mit anderen Komponenten angereicherte Luft, zum Beispiel aus Verbrennungsprozessen. Im Falle des Einsatzes eines Reformers in einer APU, die auf der Basis einer Hochtemperaturbrennstoffzelle (zum Beispiel SOFC) arbeitet, eignet sich insbesondere der Luftstrom, welcher zur Kathode der Brennstoffzelle geleitet wird, als Wärmeübertragermedium.

Der erfindungsgemäße Reformer ist in besonders vorteilhafter Weise dadurch weitergebildet, dass die Anteile der Reaktionszonen an der Reformerleistung über die zugeführten Mengen von Brennstoff und/oder Oxidationsmittel separat einstellbar sind. Im Allgemeinen hat jede Reaktionszone eine eigene Brennstoffzuführung und eine eigene Oxidationsmittelzuführung, wobei die dosierte Zuführmöglichkeit der Substanzen durch Aufteilung einer gemeinsamen Zuführung und in den Verzweigungen vorgesehene Ventile realisiert sein kann.

Die Erfindung baut auf dem gattungsgemäßen Verfahren dadurch auf, dass mindestens eine weitere Reaktionszone vorgesehen ist, der Brennstoff und Oxidationsmittel zuführbar sind, dass in jeder Reaktionszone Brennstoff und Oxidationsmittel zu Reformat umgesetzt werden können, und dass die Anteile der Reaktionszonen an der Reformerleistung über die zugeführten Mengen von Brennstoff und/oder Oxidationsmittel separat eingestellt werden. Auf diese Weise werden die Vorteile und Besonderheiten des erfindungsgemäßen Reformers auch im Rahmen eines Verfahrens umgesetzt. Dies gilt auch für die nachfolgend angegebenen besonders bevorzugten Ausführungsformen des erfindungsgemäßen Verfahrens.

Dieses ist nützlicherweise so fortgebildet, dass die Umsetzung nach dem Verfahren der partiellen Oxidation (POX) erfolgt.

Es kann weiterhin vorgesehen sein, dass die Umsetzung nach dem Verfahren der katalytischen partiellen Oxidation (CPOX) erfolgt.

Es ist bevorzugt, dass die Reaktionszonen in thermischem Kontakt stehen.

Besonders nützlich ist es, dass die Reaktionszonen eine im Wesentlichen axialsymmetrische Anordnung aufweisen, wobei eine Reaktionszone eine andere umgibt, dass die Hauptströmungsrichtung der miteinander reagierenden Substanzen im Wesentlichen eine axiale Richtung ist und dass die Hauptströmungsrichtungen in einander benachbarten Reaktionszonen entgegengesetzt sind.

Es ist weiterhin vorteilhaft, dass Wärme aus den Reaktionszonen mit einem Wärmeübertrager abgeführt wird.

Der Erfindung liegt die Erkenntnis zugrunde, dass die Bereitstellung mehrer Reaktionszonen einen positiven Einfluss auf den Wärmehaushalt des Reformers hat. Heiße Bereiche können örtlich stabilisiert werden, auch wenn die Reformerleistung moduliert wird. Weitere Vorteile hängen damit zusammen, dass durch die Aufteilung der Reaktionszonen der Druckverlust im Reformer verringert wird. Dies führt zu einer Erhöhung des Wirkungsgrades. Die Erfindung stellt weiterhin positive Auswirkungen auf die Regenerationsmöglichkeiten des Reformers zur Verfügung. Nimmt die Katalysatoraktivität beispielsweise durch Rußbildung und/oder Vergiftung ab, so können die einzelnen Reaktionszonen unabhängig voneinander mit dem Oxidationsmittel regeneriert werden. Dies ermöglicht die Regeration von beispielsweise einer Reaktionszone, während die andere(n) Reaktionszone(n) unterbrechungsfrei Wasserstoff produzieren kann/können. Dieser Prozess kann so geführt werden, dass kein beziehungsweise nahezu kein Sauerstoff auf die Brennstoffzellen-Anode gelangt. Aus der Reaktionszone austretender Ruß sowie H₂ und CO können postkatalytisch verbrannt werden und die Rußbildungsgefahr vermindern. Weiterhin ist als vorteilhaft zu verzeichnen, dass aufgrund der verschiedenen Betriebsmöglichkeiten zur Bereitstellung einer bestimmten Reformerleistung die Anteile von CO₂ und H₂O im Reformat variabel sind. Diese Anteile können somit auf die Bedürfnisse der Brennstoffzelle abgestimmt werden.

Die Erfindung wird nun mit Bezug auf die begleitenden Zeichnungen anhand besonders bevorzugter Ausführungsformen beispielhaft beschrieben.

Dabei zeigt:
- Figur 1: eine schematische Darstellung eines erfindungsgemäßen Reformers und
- Figur 2: ein Flussdiagramm zur Erläuterung eines erfindungsgemäßen Verfahrens.

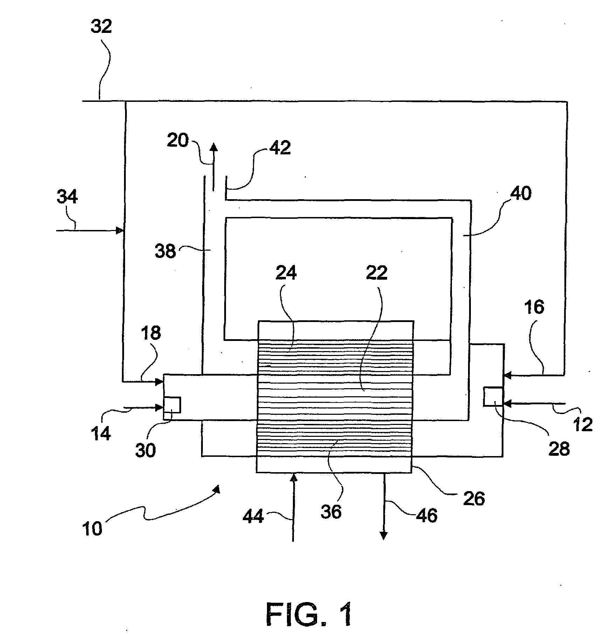

Figur 1 zeigt eine schematische Darstellung eines erfindungsgemäßen Reformers. Der dargestellte Reformer 10 hat zwei Reaktionszonen 22, 24. Diese Reaktionszonen 22, 24 sind im Wesentlichen axialsymmetrisch aufgebaut, wobei die eine Reaktionszone 24 die Reaktionszone 22 umgibt. Am Eingang jeder der Reaktionszonen 22, 24 ist ein Einspritzsystem 28, 30 zum Einspritzen von Brennstoff 12, 14 in die Reaktionszonen 22, 24 vorgesehen. Weiterhin kann den Reaktionszonen 22, 24 Oxidationsmittel 16, 18 zugeführt werden, das heißt insbesondere Luft. Hierzu können separate Luftzuführungen vorgesehen sein oder, wie im vorliegenden Beispiel, es kann eine zentrale Luftzuführung 32 vorgesehen sein, wobei zur Variation der Luftmengen, die den jeweiligen Reaktionszonen 22, 24 zugeführt werden, ein Ventil 34 beziehungsweise mehrere Ventile vorgesehen sein können. Innerhalb der Reaktionszonen 22, 24 befindet sich ein Katalysator 36 beziehungsweise mehrere Katalysatoren, so dass ein Reformierungsprozess nach dem Prinzip der katalytischen partiellen Oxidation (CPOX) durchgeführt werden kann. Es sind weiterhin Produktgasführungen 38, 40 vorgesehen, die zu einem Mischpunkt 42 führen. Jenseits dieses Mischpunktes 42 ist dem Reformer 20 das Reformat entnehmbar. Weiterhin ist ein Wärmeübertrager 26 im Bereich des Katalysators 36 angeordnet, der mittels eines Kühlmediums, dessen Vorlauf 44 und dessen Rücklauf 46 gezeigt sind, zur Kühlung der beteiligten Bauteile und insbesondere des Katalysators 36 vorgesehen ist.

Der dargestellte Reformer 10 arbeitet wie folgt. Soll der Reformer 10 mit maximaler Reformerleistung arbeiten, so wird beiden Reaktionszonen 22, 24 Brennstoff 12, 14 über die jeweiligen Einspritzsysteme 28, 30 zugeführt. Ebenfalls wird jeder Reaktionszone 22, 24 Oxidationsmittel 16, 18 zugeführt. Die Gase strömen in entgegengesetzte Richtung durch die Reaktionszonen 22, 24. Daher ist die Oxidationszone der einen Reaktionszone 22, 24 der Reformierzone der anderen Reaktionszone 24, 22 benachbart. Es kann somit ein vorteilhafter Wärmeausgleich zwischen den Reaktionszonen 22, 24 stattfinden. Die Produktgase werden über die Produktgasführung 38, 40 dem Mischpunkt 42 zugeführt, hinter welchem das fertige Reformat 20 entnommen und weiteren Anwendungen zugeführt werden kann. Hat der gesamte Reformer beispielsweise einen Leistungsbereich von 3 bis 15 kW, das heißt die Leistung kann in einem Verhältnis von 5:1 moduliert werden, so können beispielsweise beide Reaktionszonen 22, 24 so ausgelegt werden, dass sie eine Reformerleistung zwischen 3 und 7,5 kW erbringen können. Jede einzelne Reaktionszone muss daher nur ein Modulationsvermögen von 2,5:1 aufweisen. Die Maximalleistung des Reformers erhält man durch parallelen Betrieb beider Reaktionszonen 22, 24, während die Minimalleistung durch Abschalten einer Reaktionszone 22, 24 und Betreiben der anderen Reaktionszone 22, 24 mit minimaler Leistung erreicht wird. Die geringeren erforderlichen Leistungsmodulationen in den einzelnen Reaktionszonen äußern sich insbesondere in einer besseren Lokalisierung des Hot-Spots.

Im obigen Beispiel ist es erforderlich, eine der Reaktionszonen abzuschalten, wenn der Reformer mit einer niedrigen Leistung von beispielsweise 3 kW arbeiten soll. Es ist aber auch denkbar, dass über den kompletten Leistungsbereich, also auch schon bei geringer Leistung, beide Reaktionszonen 22, 24 in Betrieb sind. Dabei wird allerdings die Verbesserung aufgrund verringerter Lastmodulation zu Gunsten eines homogeneren Temperaturprofils aufgegeben. Geht man wieder von dem Beispiel aus, dass der Reformer insgesamt einen Leistungsbereich von 3 bis 15 kW haben soll, das heißt ein Modulationsvermögen von 5:1, so ist bei gefordertem Parallelbetrieb beider Reaktionszonen auch bei kleiner Leistung jede der Reaktionszonen für eine Reformerleistung zwischen 1,5 und 7,5 kW auszulegen, das heißt jede der Reaktionszonen hat ein Modulationsvermögen von 5:1.

Weitere Variationsmöglichkeiten bestehen dadurch, dass beide Reaktionszonen 22, 24 mit unterschiedlichen Luftzahlen betrieben werden, beispielsweise mit λ < 1 oder λ > 1. Dies kann zum Beispiel für eine Regeneration des Katalysators 36 nützlich sein.

Es kann auch vorgesehen sein, dass der in eine der "Reaktionszonen" 22, 24 eintretende Luftstrom nur zur Kühlung der anderen Reaktionszone 22, 24 verwendet wird. In diesem Fall kann der verbleibende Luftsauerstoff ab dem Mischpunkt 42 die Komponenten des anderen Teilstroms (beispielsweise H₂, CO, Restkohlenwasserstoffe, Ruß) oxidieren. Die resultierende Erhöhung des S/C-Verhältnisses im Reformat kann aufgrund verminderter Rußbildung vorteilhaft für nachgeschaltete Komponenten sein, insbesondere für eine Brennstoffzelle.

Bisher wurde davon ausgegangen, dass beide Reaktionszonen im Hinblick auf ihre Leistungsbereiche und ihr Modulationsvermögen gleich ausgelegt sind. Es kann aber auch sinnvoll sein, insbesondere in Verbindung mit einem eingesetzten Wärmeübertrager 26, eine Asymmetrie hinsichtlich der Leistungsbereiche beider Reaktionszonen 22, 24 zu realisieren. Wird die äußere Reaktionszone 24 mit einer höheren maximalen Reformerleistung ausgestattet, so entsteht der überwiegende Teil der Wärme dort, von wo er effektiv an den im Außenbereich des Reformers 10 angeordneten Wärmeübertrager 26 abgegeben werden kann. Geht man wieder von dem Beispiel eines Reformers mit einem Leistungsbereich von 3 bis 15 kW und einem Modulationsvermögen von 5:1 aus, so könnte beispielsweise die äußere Reaktionszone 24 mit einer Reformerleistung von 3 bis 9 kW und einem Modulationsvermögen von 3:1 ausgestattet sein, während die innere Reaktionszone 22 einen Leistungsbereich von 3 bis 6 kW und ein Modulationsvermögen von 2:1 zur Verfügung stellt. Die äußere Reaktionszone 24 kann also 60% der Gesamtleistung erbringen, während die innere Reaktionszone 22 nur 40% erbringen kann.

Die vorstehenden Beispiele beziehen sich auf eine Realisierung des Reformers mit zwei Reaktionszonen. Sie können ohne weiteres auf eine Realisierung mit mehr als zwei Reaktionszonen übertragen werden, wodurch insbesondere die Variationsmöglichkeiten im Hinblick auf die Auslegung der Leistungs- beziehungsweise Modulationsbereiche erhöht werden.

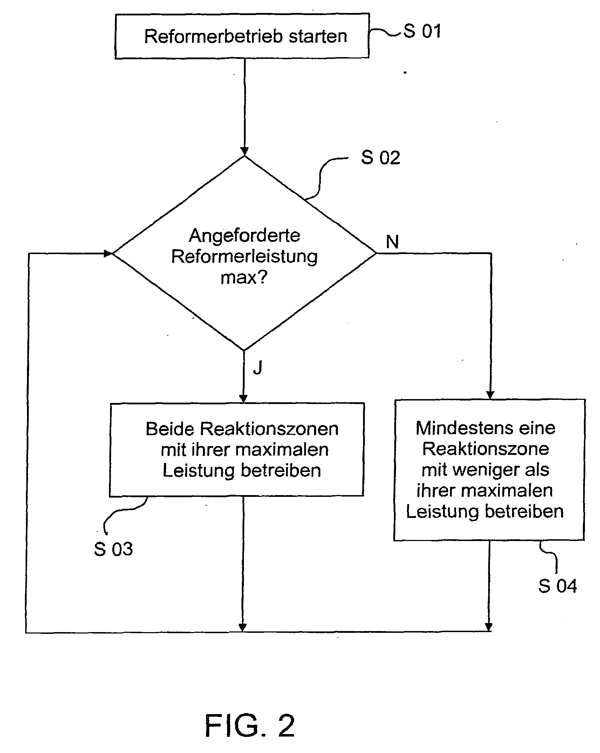

Figur 2 zeigt ein Flussdiagramm zur Erläuterung eines erfindungsgemäßen Verfahrens. Nach dem Start des Reformerbetriebs im Schritt S01 wird die vom Gesamtsystem angeforderte Reformerleistung überwacht. Ist diese angeforderte Reformerleistung zum Beispiel maximal (Schritt S02), so werden beide Reaktionszonen mit ihrer maximalen Reformerleistung betrieben (Schritt S03). Ist die angeforderte Reformerleistung nicht maximal, so wird gemäß Schritt S04 mindestens eine der Reaktionszonen mit einer verminderten Leistung betrieben. Durch eine kontinuierliche Überwachung kann so der Reformer seine Leistung in erwünschter Weise und mit den erfindungsgemäßen Vorteilen variieren. Das dargestellte stark vereinfachte Funktionsprinzip kann insbesondere dadurch verfeinert werden, dass Schritt S02 dahin fortgebildet ist, das je nach angeforderter Reformerleistung unterschiedliche Betriebszustände im Hinblick auf die beteiligten Reaktionszonen eingestellt werden, wobei neben den Leistungsanforderungen auch andere Parameter berücksichtigt werden können.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Reformer
- 12: Brennstoff
- 14: Brennstoff
- 16: Oxidationsmittel
- 18: Oxidationsmittel
- 20: Reformat
- 22: Reaktionszone
- 24: Reaktionszone
- 26: Wärmeübertrager
- 28: Einspritzsystem
- 30: Einspritzsystem
- 32: Luftzuführung
- 34: Ventil
- 36: Katalysator
- 38: Produktgasführung
- 40: Produktgasführung
- 42: Mischpunkt
- 44: Vorlauf
- 46: Rücklauf

## Patentansprüche

1. Reformer (10) zum Umsetzen von Brennstoff (12, 14) und Oxidationsmittel (16, 18) zu Reformat (20), mit einer Reaktionszone (22), der Brennstoff (12) und Oxidationsmittel (16) zuführbar sind, **dadurch gekennzeichnet,**
- **dass** mindestens eine weitere Reaktionszone (24) vorgesehen ist, der Brennstoff (14) und Oxidationsmittel (18) zuführbar sind, und
- **dass** in jeder Reaktionszone (22, 24) Brennstoff (12, 14) und Oxidationsmittel (16, 18) zu Reformat (20) umgesetzt werden können.

2. Reformer nach Anspruch 1, **dadurch gekennzeichnet, dass** die Umsetzung nach dem Verfahren der partiellen Oxidation (POX) erfolgt.

3. Reformer nach Anspruch 2, **dadurch gekennzeichnet, dass** die Umsetzung nach dem Verfahren der katalytischen partiellen Oxidation (CPOX) erfolgt.

4. Reformer nach einem der vorangehenden Ansprüche, **dadurch gekennzeichnet, dass** die Reaktionszonen (22, 24) in thermischem Kontakt stehen.

5. Reformer nach einem der vorangehenden Ansprüche, **dadurch gekennzeichnet,**
- **dass** die Reaktionszonen (22, 24) eine im Wesentlichen axialsymmetrische Anordnung aufweisen, wobei eine Reaktionszone (24) eine andere (22) umgibt,
- **dass** die Hauptströmungsrichtung der miteinander reagierenden Substanzen im Wesentlichen eine axiale Richtung ist und
- **dass** die Hauptströmungsrichtungen in einander benachbarten Reaktionszonen (22, 24) entgegengesetzt sind.

6. Reformer nach einem der vorangehenden Ansprüche, **dadurch gekennzeichnet, dass** ein Wärmeübertrager (26) zum Abführen von Wärme aus den Reaktionszonen (22, 24) vorgesehen ist.

7. Reformer nach einem der vorangehenden Ansprüche, **dadurch gekennzeichnet, dass** die Anteile der Reaktionszonen (22, 24) an der Reformerleistung über die zugeführten Mengen von Brennstoff (12, 14) und/oder Oxidationsmittel (16, 18) separat einstellbar sind.

8. Verfahren zum Umsetzen von Brennstoff (12, 14) und Oxidationsmittel (16, 18) zu Reformat (20) in einem Reformer (10) mit einer Reaktionszone (22), bei dem der Reaktionszone (22) Brennstoff (12, 14) und Oxidationsmittel (16, 18) zugeführt werden, **dadurch gekennzeichnet,**
- **dass** mindestens eine weitere Reaktionszone 24 vorgesehen ist, der Brennstoff (12, 14) und Oxidationsmittel (16, 18) zuführbar sind,
- **dass** in jeder Reaktionszone (22, 24) Brennstoff (12, 14) und Oxidationsmittel (16, 18) zu Reformat (20) umgesetzt werden können, und
- **dass** die Anteile der Reaktionszonen (22, 24) an der Reformerleistung über die zugeführten Mengen von Brennstoff (12, 14) und/oder Oxidationsmittel (16, 18) separat eingestellt werden.

9. Verfahren nach Anspruch 8, **dadurch gekennzeichnet, dass** die Umsetzung nach dem Verfahren der partiellen Oxidation (POX) erfolgt.

10. Verfahren nach Anspruch 9, **dadurch gekennzeichnet, dass** die Umsetzung nach dem Verfahren der katalytischen partiellen Oxidation (CPOX) erfolgt.

11. Verfahren nach einem der Ansprüche 8 bis 10, **dadurch gekennzeichnet, dass** die Reaktionszonen (22, 24) in thermischem Kontakt stehen.

12. Verfahren nach einem der Ansprüche 8 bis 11, **dadurch gekennzeichnet,**
- **dass** die Reaktionszonen (22, 24) eine im Wesentlichen axialsymmetrische Anordnung aufweisen, wobei eine Reaktionszone (22) eine andere umgibt,
- **dass** die Hauptströmungsrichtung der miteinander reagierenden Substanzen im Wesentlichen eine axiale Richtung ist und
- **dass** die Hauptströmungsrichtungen in einander benachbarten Reaktionszonen (22, 24) entgegengesetzt sind.

13. Verfahren nach einem der Ansprüche 8 bis 12, **dadurch gekennzeichnet, dass** Wärme aus den Reaktionszonen (22, 24) mit einem Wärmeübertrager (26) abgeführt wird.
